# EUROPEAN PATENT APPLICATION

(11) **EP 4 818 050 A1**
(43) Date of publication of application: **07.10.2026**
(21) Application number: 24925710.6
(22) Date of filing: 13.12.2024
(51) Int. Cl.: B64G 1/40, B64G 1/50

(54) **PROPELLANT PLANT SYSTEM**

(30) Priority: 20.02.2024 JP 2024023664
(71) Applicant: Mitsubishi Heavy Industries, Ltd., Chiyoda-ku Tokyo 100-8332 (JP)
(72) Inventor: NAKAMICHI, Kenji, Tokyo 100-8332 (JP); HARADA, Motoshi, Tokyo 100-8332 (JP); ISHIKAWA, Keitaro, Tokyo 100-8332 (JP)
(74) Representative: Hoffmann Eitle
(86) International application number: PCT/JP2024/044244
(87) International publication number: WO 2025/177676

(57) **Abstract**

There is provided is a propellant plant system that enables efficient manufacturing, storage, and supply of propellants in outer space. The propellant plant system includes a water intake device that recovers water resources and stores the water resources as liquid water, an electrolysis device that electrolyzes the water to generate hydrogen gas and oxygen gas, a liquefaction device that liquefies a target gas that is at least one of the hydrogen gas and the oxygen gas, a storage tank that stores a target liquid that is the liquefied target gas, a first refrigerator that cools the storage tank, a first heat radiator that exchanges heat with the first refrigerator, and a power generation device that is installable in a sunlit region of a lunar polar region and generates power by irradiation with sunlight to supply power to at least one of the electrolysis device, the liquefaction device, and the first refrigerator, in which, in a case where the first heat radiator is installed in a shaded region of the lunar polar region, the first heat radiator dissipates heat to the shaded region to cool the first refrigerator at an environmental temperature in the shaded region.

## Description

### Technical Field

The present disclosure relates to a propellant plant system.

### Background Art

In recent years, it has been studied to provide a facility for manufacturing, storing, and supplying propellants such as liquid hydrogen and liquid oxygen, which are fuels for an inter-orbit transfer vehicle that navigates between Earth and a space base or a geostationary satellite, in outer space. For example, PTL 1 discloses a propellant manufacturing and storage device that produces liquid hydrogen and liquid oxygen from water stored in a water tank in outer space.

### Citation List

### Patent Literature

[PTL 1] Japanese Unexamined Patent Application Publication No. 3-186500

### Summary of Invention

### Technical Problem

However, the device in PTL 1 requires transporting water to outer space, and requires a large amount of energy for cooling a liquefied gas storage tank or a liquefier, which leaves a problem in terms of cost.

The present disclosure has been made to solve the above-described problems, and an object of the present disclosure is to provide a propellant plant system that enables efficient manufacturing, storage, and supply of propellants in outer space. Solution to Problem

In order to achieve the above-described object, according to an aspect of the present disclosure, there is provided a propellant plant system including: a water intake device that recovers water resources and stores the water resources as liquid water; an electrolysis device that electrolyzes the water to generate hydrogen gas and oxygen gas; a liquefaction device that liquefies a target gas that is at least one of the hydrogen gas and the oxygen gas; a storage tank that stores a target liquid that is the liquefied target gas; a first refrigerator that cools the storage tank; a first heat radiator that exchanges heat with the first refrigerator; and a power generation device that is installable in a sunlit region of a lunar polar region and generates power by irradiation with sunlight to supply power to at least one of the electrolysis device, the liquefaction device, and the first refrigerator, in which, in a case where the first heat radiator is installed in a shaded region of the lunar polar region, the first heat radiator dissipates heat to the shaded region to cool the first refrigerator at an environmental temperature in the shaded region.

### Advantageous Effects of Invention

According to the present disclosure, it is possible to efficiently manufacture, store, and supply propellants in outer space.

### Brief Description of Drawings

FIG. 1 is a schematic diagram showing a schematic configuration of a propellant plant system according to the present embodiment.
FIG. 2 is a schematic diagram showing a schematic configuration of a hydrogen liquefaction device shown in FIG. 1.
FIG. 3 is a schematic diagram showing a schematic configuration of an oxygen liquefaction device shown in FIG. 1.
FIG. 4 is a schematic diagram showing a disposition example of a heat radiator shown in FIG. 1.
FIG. 5 is a schematic diagram showing another disposition example of the heat radiator shown in FIG. 1.

### (Embodiment)

Hereinafter, an embodiment according to the present disclosure will be described in detail with reference to the drawings. The present invention is not limited to the embodiment. **In** addition, components in the following embodiment include components that can be easily replaced by those skilled in the art, components that are substantially identical, or components that fall within an equivalent range. Furthermore, various omissions, replacements, or changes can be made to the components in the following embodiment without departing from the gist of the present disclosure. **In** the following embodiment, in order to exemplify the embodiment, necessary components will be described, and other components will be omitted. The same reference numerals will be assigned to the same components, and different reference numerals will be assigned to different components.

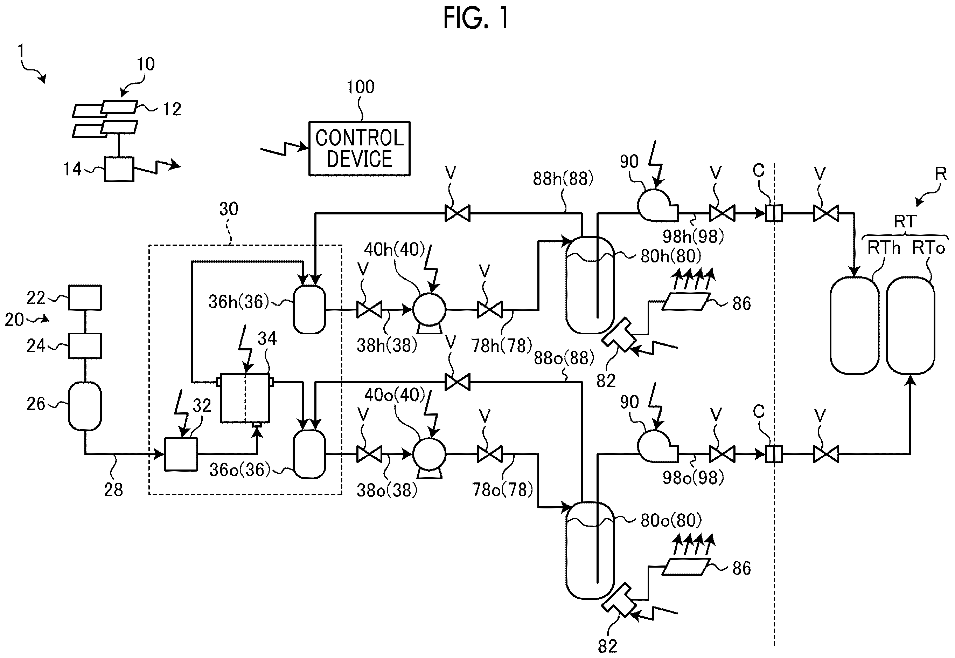

FIG. 1 is a schematic diagram showing a schematic configuration of a propellant plant system according to the present embodiment. A propellant plant system 1 shown in FIG. 1 is a system used on the lunar surface. The propellant plant system 1 is a facility that produces liquid hydrogen and liquid oxygen, which are propellants, by utilizing resources and the environment of the moon in a case where the propellant plant system 1 is installed in a lunar polar region. The lunar polar region refers to a region having a latitude of 60 degrees or more and 90 degrees or less, preferably a latitude of 85 degrees or more and 90 degrees or less, and more preferably a latitude of 89 degrees or more and 90 degrees or less, including the poles of the lunar surface. Hereinafter, a case where the propellant plant system 1 is disposed on the lunar surface will be described as an example.

The propellant plant system 1 is described as being installed in the lunar polar region, but the present disclosure is not limited thereto, and the present disclosure can also be applied to other planets or satellites in a similar environment. The similar environment includes having water resources, having a sunlit region and a shaded region, and having an environmental temperature of the shaded region of 4 [K] or higher and 200 [K] or lower, preferably 20 [K] or higher and 100 [K] or lower. In addition, it is preferable that the sunlit region and the shaded region are not frequently replaced.

The propellant plant system 1 shown in FIG. 1 includes a power generation device 10, a water intake device 20, an electrolysis device 30, a liquefaction device 40, a storage tank 80, and a control device 100.

The power generation device 10 generates power using renewable energy. The power generation device 10 of the present embodiment installed in the lunar polar region generates power using sunlight that irradiates the sunlit region of the lunar polar region. Since the moon has a thin atmosphere and direct sunlight reaches the moon, efficient power generation is possible. The power generation device 10 includes a solar panel 12 and a power storage device 14.

The solar panel 12 has a plurality of solar battery modules that generate power by irradiation with sunlight. The solar panel 12 is installed in the sunlit region. Since sunlight is emitted from a substantially horizontal direction in the lunar polar region, it is preferable that a light-receiving surface of the solar panel 12 is inclined by 0 [deg] or more and 90 [deg] or less, preferably 0 [deg] or more and 80 [deg] or less with respect to the horizontal plane. In this case, it is preferable that the solar panel 12 can change a posture such that the light-receiving surface faces a direction of the sun, and for example, it is preferable that the solar panel 12 can revolve around a vertical axis.

The power storage device 14 is charged with the power generated by the solar panel 12. The power generated by the solar panel 12 may be converted into power suitable for power storage in the power storage device 14 by a power conditioner (not shown). The power storage device 14 supplies power for operating each unit of the propellant plant system 1. A supply destination of the power stored in the power storage device 14 is exemplified by a target indicated by a broken line arrow in FIGS. 1, 2, and 3. The power storage device 14 includes a secondary battery, and for example, includes a lithium ion battery (LiB).

The water intake device 20 recovers a water resource from a site where the propellant plant system 1 is installed and stores the water resource as liquid water. The water intake device 20 of the present embodiment installed in the lunar polar region recovers a water resource that is suggested to be present in a shaded region of the lunar polar region, particularly in permanent shade such as an inside of a crater in the lunar polar region. The water resource is included in the ground or on the ground surface, and is attached to or included in sand, gravel, rocks, or the like as ice or frost. The water intake device 20 includes, for example, an ice collection device 22, a separation and purification device 24, and a water storage tank 26.

The ice collection device 22 collects ice and frost together with sand, gravel, and rocks from the ground or the ground surface. The ice collection device 22 may be implemented by, for example, a stationary excavator, an elevator, and a transport vehicle or a transfer conveyor, or may be implemented by a mobile robot having a drill or a robot arm.

The separation and purification device 24 separates pure water from the sand, gravel, rocks, ice, and frost collected by the ice collection device 22. The separation and purification device 24 includes, for example, a crusher that crushes rocks, a heater that melts ice and frost, a filtering device, a distiller that removes impurities, and the like. As heating means of the heater and the distiller, solar heat radiation in a sunlit region may be used.

The water storage tank 26 stores the pure water separated by the separation and purification device 24. The pure water stored in the water storage tank 26 is in a liquid state. The pure water stored in the water storage tank 26 is sent to the electrolysis device 30 via a water supply line 28.

The electrolysis device 30 electrolyzes the pure water supplied from the water storage tank 26 to generate hydrogen gas and oxygen gas. The electrolysis device 30 of the present embodiment is a solid polymer type water electrolysis device using pure water, and is a high-pressure electrolysis device that electrolyzes high-pressure water to obtain high-pressure hydrogen gas and oxygen gas. The electrolysis device 30 includes a high-pressure water supply pump 32, an electrolytic cell 34, and a gas tank 36.

The high-pressure water supply pump 32 pressurizes the pure water supplied from the water storage tank 26 and sends high-pressure water. The high-pressure water is pure water at normal temperature pressurized to 0.1 [MPa] or more and 100 [MPa] or less, preferably 0.1 [MPa] or more and 90 [MPa] or less. The normal temperature refers to 5 [°C] or higher and 80 [°C] or lower, preferably 20 [°C] or higher and 50 [°C] or lower. The high-pressure water supply pump 32 sends the high-pressure water at normal temperature to an anode side of the electrolytic cell 34.

The electrolytic cell 34 has an anode, a cathode, an electrolyte membrane that separates the anode side and the cathode side, and a catalyst in a tank. In the electrolytic cell 34, a predetermined voltage is applied between electrodes, so that the pure water supplied to the anode side is electrolyzed, and hydrogen gas is generated on the cathode side and oxygen gas is generated on the anode side. The power supplied to the electrolytic cell 34 is supplied from the power storage device 14. In the electrolytic cell 34, a reaction represented by Reaction Formula (1) occurs on the anode side, a reaction represented by Reaction Formula (2) occurs on the cathode side, and a reaction represented by Reaction Formula (3) occurs as a whole.

2H₂O → O₂ + 4H⁺ + 4e⁻ ... (1)

4H⁺ + 4e⁻ → 2H₂ ... (2)

2H₂O → O₂ + 2H₂ ... (3)

The gas generated by electrolyzing water in the electrolytic cell 34 is used as a target gas. In this case, the target gas generated in the electrolytic cell 34 is sent to the gas tank 36 and is stored in the gas tank 36. The target gas here is at least one of hydrogen gas and oxygen gas. More specifically, in the present embodiment, as the gas tank 36, a hydrogen gas tank 36h that stores hydrogen gas and an oxygen gas tank 36o that stores oxygen gas are provided. However, the gas tank 36 is not limited to having both the hydrogen gas tank 36h and the oxygen gas tank 36o, and may have at least one of the hydrogen gas tank 36h and the oxygen gas tank 36o.

In the present embodiment, the hydrogen gas generated on the cathode side of the electrolytic cell 34 is sent to the hydrogen gas tank 36h. The oxygen gas generated on the anode side of the electrolytic cell 34 is sent to the oxygen gas tank 36o. For example, a back pressure valve (not shown) is provided between the electrolytic cell 34 and the hydrogen gas tank 36h and between the electrolytic cell 34 and the oxygen gas tank 36o.

The hydrogen gas tank 36h stores the hydrogen gas generated in the electrolytic cell 34. The hydrogen gas stored in the hydrogen gas tank 36h is a high-pressure gas at normal temperature and a pressure of 1 [MPa] or more and 100 [MPa] or less. The hydrogen gas stored in the hydrogen gas tank 36h is sent to the hydrogen liquefaction device 40h via a high-pressure hydrogen gas line 38h.

The oxygen gas tank 36o stores the oxygen gas generated in the electrolytic cell 34. The oxygen gas stored in the oxygen gas tank 36o is a high-pressure gas at normal temperature and a pressure of 1 [MPa] or more and 100 [MPa] or less. The oxygen gas stored in the oxygen gas tank 36o is sent to the oxygen liquefaction device 40o via a high-pressure oxygen gas line 38o.

The liquefaction device 40 liquefies the target gas to generate a target liquid which is the liquefied target gas. In the present embodiment, as the liquefaction device 40, a hydrogen liquefaction device 40h that liquefies hydrogen gas to generate liquid hydrogen and an oxygen liquefaction device 40o that liquefies oxygen gas to generate oxygen hydrogen are provided. However, the gas tank 36 is not limited to having both the hydrogen liquefaction device 40h and the oxygen liquefaction device 40o, and may have at least one of the hydrogen liquefaction device 40h and the oxygen liquefaction device 40o.

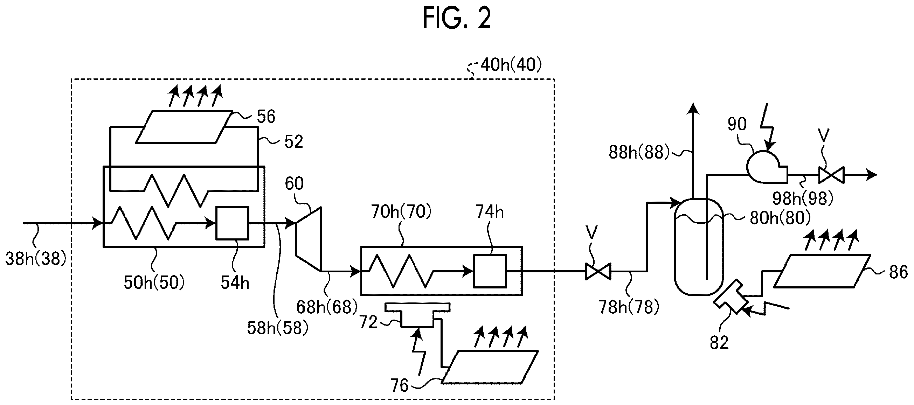

FIG. 2 is a schematic diagram showing a schematic configuration of the hydrogen liquefaction device shown in FIG. 1. Hereinafter, a configuration of the hydrogen liquefaction device 40h will be described as the liquefaction device 40. The hydrogen liquefaction device 40h shown in FIGS. 1 and 2 liquefies the hydrogen gas at normal temperature and high pressure supplied from the hydrogen gas tank 36h to generate liquid hydrogen. The hydrogen liquefaction device 40h includes a first heat exchanger 50h, an expansion turbine 60, and a second heat exchanger 70h.

The first heat exchanger 50h cools the hydrogen gas at normal temperature and high pressure supplied from the high-pressure hydrogen gas line 38h. In the first heat exchanger 50h, the hydrogen gas is cooled by an environmental temperature in a shaded region of a lunar polar region. The first heat exchanger 50h of the present embodiment exchanges heat between the hydrogen gas in the high-pressure hydrogen gas line 38h and a refrigerant circulating through a refrigerant line 52. The hydrogen gas is cooled by the refrigerant cooled by the environmental temperature in the shaded region of the lunar polar region, and is cooled to 4 [K] or higher and 200 [K] or lower, preferably 20 [K] or higher and 100 [K] or lower. In the embodiment, for example, the temperature is 140 [K]. The refrigerant is heated by the hydrogen gas.

A conversion unit 54h having a catalyst for promoting conversion from ortho-hydrogen to para-hydrogen is provided downstream of the high-pressure hydrogen gas line 38h. Since the hydrogen gas rapidly cooled in the first heat exchanger 50h has an excessive amount of the ortho-hydrogen remaining, the conversion from ortho-hydrogen to para-hydrogen is promoted in the conversion unit 54h. The catalyst contains, for example, a paramagnetic substance such as iron hydroxide or chromium oxide.

The refrigerant line 52 connects the first heat exchanger 50h and a heat radiator 56. The refrigerant circulating through the refrigerant line 52 contains, for example, a non-freezing liquid such as silicon oil, ethylene glycol, a fluorine-based liquid, or an ether-based liquid, or a gas such as helium (He), nitrogen (N₂), argon (Ar), methane (CH₄), or ethane (C₂H₆). The refrigerant heated by the hydrogen gas dissipates heat in the heat radiator 56. The heat radiator 56 includes a radiator. In the heat radiator 56, the refrigerant heated by the hydrogen gas in the first heat exchanger 50h flows through the inside, and the refrigerant flowing through the inside is cooled by the environmental temperature. The heat radiator 56 is installed in a shaded region of a lunar polar region. The heat radiator 56 is exposed to a high vacuum region in the shaded region of the lunar polar region, dissipates heat by radiation, and cools the refrigerant by the environmental temperature in the shaded region of the lunar polar region. The heat radiator 56 cools the refrigerant to a temperature of about 100 [K] or higher and 200 [K] or lower. Alternatively, the refrigerant may be cooled to a temperature of 150 [K] or higher and 250 [K] or lower. In the embodiment, for example, the environmental temperature in the shaded region is 100 [K], and the refrigerant temperature is 120 [K]. It is preferable that the heat dissipation surface of the heat radiator 56 is inclined by 0 [deg] or more and 90 [deg] or less, and preferably 0 [deg] or more and 80 [deg] or less with respect to the horizontal plane. In this manner, it is possible to suppress the accumulation of dust and the like on the heat dissipation surface and to suppress a decrease in heat dissipation efficiency.

The high-pressure hydrogen gas line 38h communicates with a first cooling hydrogen gas line 58h. The hydrogen gas cooled by the first heat exchanger 50h and promoted to be converted into the para-hydrogen by the conversion unit 54h is sent to the expansion turbine 60 via the first cooling hydrogen gas line 58h.

The expansion turbine 60 cools the high-pressure hydrogen gas by the environmental temperature in the shaded region of the lunar polar region in the first heat exchanger 50h, and adiabatically expands the high-pressure hydrogen gas cooled to a temperature of about the same temperature. As a result, the pressure of the hydrogen gas is reduced, and the hydrogen gas is cooled. The hydrogen gas at the outlet of the expansion turbine 60 has a pressure of 0.1 [MPa] or more and 10 [MPa] or less and a temperature of 20 [K] or higher and 150 [K] or lower. The hydrogen gas decompressed and cooled by the expansion turbine 60 is sent to the second heat exchanger 70h via a second cooling hydrogen gas line 68h.

The second heat exchanger 70h further cools the hydrogen gas cooled in the first heat exchanger 50h and the expansion turbine 60 and supplied from the second cooling hydrogen gas line 68h. In the second heat exchanger 70h, the hydrogen gas is cooled and liquefied to a temperature equal to or lower than the boiling point, preferably 20 [K] or higher and 30 [K] or lower. The second heat exchanger 70h of the present embodiment exchanges heat between the hydrogen gas of the second cooling hydrogen gas line 68h and the liquid or gas on the low-temperature side in the refrigerator 72. The hydrogen gas is cooled by the refrigerator 72. The refrigerator 72 is heated by the hydrogen gas.

A conversion unit 74h having a catalyst for promoting the conversion from the ortho-hydrogen to the para-hydrogen is provided downstream of the second cooling hydrogen gas line 68h. Since the liquid hydrogen rapidly cooled and liquefied in the second heat exchanger 70h has an excessive amount of the ortho-hydrogen remaining, the conversion from the ortho-hydrogen to the para-hydrogen is promoted in the conversion unit 74h. The catalyst contains, for example, a paramagnetic substance such as iron hydroxide or chromium oxide.

The refrigerator 72 moves heat by the principle of the heat pump, cools the liquid or gas on the low-temperature side, and heats the high-temperature side. The power supplied to the refrigerator 72 is supplied from the power storage device 14. The high-temperature side of the refrigerator 72 is connected to a heat radiator 76 and is subjected to heat dissipation. The heat radiator 76 includes a radiator. The heat radiator 76 cools the liquid or gas on the high-temperature side of the refrigerator 72 by the environmental temperature. The heat radiator 76 is installed in a shaded region of a lunar polar region. The heat radiator 76 is exposed to a high vacuum region in the shaded region of the lunar polar region, dissipates heat by radiation, and cools the liquid or gas on the high-temperature side of the refrigerator 72 by the environmental temperature in the shaded region of the lunar polar region. The heat radiator 76 cools the liquid or gas on the high-temperature side of the refrigerator 72 to a temperature of about the same temperature, that is, 4 [K] or higher and 200 [K] or lower, preferably 20 [K] or higher and 100 [K] or lower.

The second cooling hydrogen gas line 68h communicates with a liquid hydrogen line 78h. The liquid hydrogen that is further cooled and liquefied by the second heat exchanger 70h and in which the conversion into the para-hydrogen is promoted by the conversion unit 74h is sent to the liquid hydrogen storage tank 80h via the liquid hydrogen line 78h.

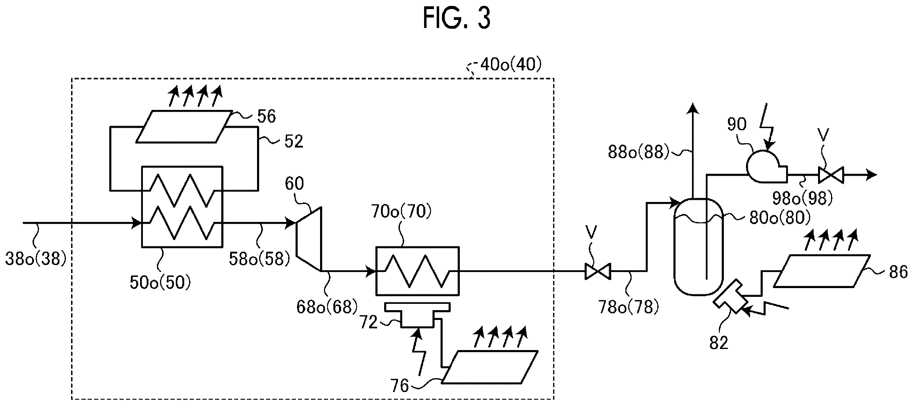

FIG. 3 is a schematic diagram showing a schematic configuration of the oxygen liquefaction device shown in FIG. 1. Hereinafter, a configuration of the oxygen liquefaction device 40o will be described as the liquefaction device 40. The oxygen liquefaction device 40o shown in FIGS. 1 and 3 liquefies the oxygen gas at normal temperature and high pressure supplied from the oxygen gas tank 36o to generate liquid oxygen. In the configuration of the oxygen liquefaction device 40o, the same configurations as those of the hydrogen liquefaction device 40h shown in FIG. 2 are denoted by the same reference numerals, and the description thereof will be omitted as appropriate. The oxygen liquefaction device 40o includes a first heat exchanger 50o, an expansion turbine 60, and a second heat exchanger 70o.

The first heat exchanger 50o cools the oxygen gas at normal temperature and high pressure supplied from a high-pressure oxygen gas line 38o. In the first heat exchanger 50o, the oxygen gas is cooled by the environmental temperature in the shaded region of the lunar polar region. The first heat exchanger 50o of the present embodiment exchanges heat between the oxygen gas in the high-pressure oxygen gas line 38o and a refrigerant circulating through a refrigerant line 52. The oxygen gas is cooled by the refrigerant cooled by the environmental temperature in the shaded region of the lunar polar region, and is cooled to 4 [K] or higher and 200 [K] or lower, preferably 20 [K] or higher and 100 [K] or lower. In the embodiment, for example, the temperature is 140 [K]. The refrigerant is heated by the oxygen gas.

The refrigerant line 52 connects the first heat exchanger 50o and the heat radiator 56. The configuration and function of the refrigerant line 52, the refrigerant circulating through the refrigerant line 52, and the heat radiator 56 are the same as the configuration and function of the refrigerant line 52, the refrigerant circulating through the refrigerant line 52, and the heat radiator 56 for cooling the hydrogen gas shown in FIG. 2, and thus the description thereof will be omitted. The high-pressure oxygen gas line 38o communicates with a first cooling oxygen gas line 58o. The oxygen gas cooled by the first heat exchanger 50o is sent to the expansion turbine 60 via the first cooling oxygen gas line 58o.

The configuration and function of the expansion turbine 60 of the oxygen liquefaction device 40o are the same as the configuration and function of the expansion turbine 60 of the hydrogen liquefaction device 40h. The expansion turbine 60 of the oxygen liquefaction device 40o is cooled by the environmental temperature in the shaded region of the lunar polar region in the first heat exchanger 50o, and the high-pressure oxygen gas cooled to the temperature of about the same temperature is adiabatically expanded. As a result, the pressure of the oxygen gas is reduced, and the oxygen gas is cooled. The oxygen gas at the outlet of the expansion turbine 60 has a pressure of 0.1 [MPa] or more and 10 [MPa] or less and a temperature of 90 [K] or higher and 200 [K] or lower. The oxygen gas decompressed and cooled by the expansion turbine 60 is sent to the second heat exchanger 70o via a second cooling oxygen gas line 68o.

The second heat exchanger 70o further cools the oxygen gas cooled in the first heat exchanger 50o and the expansion turbine 60 and supplied from the second cooling oxygen gas line 68o. In the second heat exchanger 70o, the oxygen gas is cooled and liquefied to a temperature equal to or lower than the boiling point, preferably 90 [K] or higher and 100 [K] or lower. The second heat exchanger 70o of the present embodiment exchanges heat between the oxygen gas of the second cooling oxygen gas line 68o and the liquid or gas on the low-temperature side in the refrigerator 72. The oxygen gas is cooled by the refrigerator 72. The refrigerator 72 is heated by the oxygen gas.

Since the configuration and function of the refrigerator 72 and the heat radiator 76 that dissipates heat from the refrigerator 72 are the same as the function and configuration of the refrigerator 72 and the heat radiator 76 for cooling and liquefying the hydrogen gas shown in FIG. 2, the description thereof will be omitted. The second cooling oxygen gas line 68o communicates with a liquid oxygen line 78o. The liquid oxygen that is further cooled and liquefied by the second heat exchanger 70o is sent to a liquid oxygen storage tank 80o via the liquid oxygen line 78o.

The storage tank 80 stores the target liquid which is the target gas liquefied in the liquefaction device 40. In the present embodiment, as the storage tank 80, a liquid hydrogen storage tank 80h that stores liquid hydrogen obtained by liquefying the hydrogen gas and the liquid oxygen storage tank 80o that stores liquid oxygen obtained by liquefying the oxygen gas are provided. However, the storage tank 80 is not limited to having both the liquid hydrogen storage tank 80h and the liquid oxygen storage tank 80o, and may have at least one of the liquid hydrogen storage tank 80h and the liquid oxygen storage tank 80o.

The liquid hydrogen storage tank 80h shown in FIGS. 1 and 2 stores the liquid hydrogen liquefied in the hydrogen liquefaction device 40h. The liquid hydrogen stored in the liquid hydrogen storage tank 80h has a temperature of 20 [K] or higher and 33 [K] or lower and a pressure of 0.1 [MPa] or higher and 3.3 [MPa] or lower.

The liquid hydrogen stored in the liquid hydrogen storage tank 80h is cooled by a refrigerator 82 and the vaporization thereof is suppressed. Since the configuration and function of the refrigerator 82 and the heat radiator 86 that dissipates heat from the refrigerator 82 are the same as the function and configuration of the refrigerator 72 and the heat radiator 76 shown in FIG. 2, the description thereof will be omitted. That is, the power supplied to the refrigerator 82 is supplied from the power storage device 14. In addition, the heat radiator 86 is installed in a shaded region of a lunar polar region.

In the liquid hydrogen storage tank 80h, the hydrogen gas that has been vaporized is returned to the hydrogen gas tank 36h via a return hydrogen gas line 88h. The liquid hydrogen stored in the liquid hydrogen storage tank 80h is suctioned by a transfer pump 90 and is supplied to the propellant tank RTh of the inter-orbit transfer vehicle R via a liquid hydrogen transfer line 98h. The power supplied to the transfer pump 90 is supplied from the power storage device 14.

The liquid oxygen storage tank 80o shown in FIGS. 1 and 3 stores the liquid oxygen liquefied in the oxygen liquefaction device 40o. The liquid oxygen stored in the liquid oxygen storage tank 80o has a temperature of 90 [K] or higher and 155 [K] or lower and a pressure of 0.1 [MPa] or higher and 5.0 [MPa] or lower.

The liquid oxygen stored in the liquid oxygen storage tank 80o is cooled by the refrigerator 82 and the vaporization thereof is suppressed. Since the configuration and function of the refrigerator 82 and the heat radiator 86 that dissipates heat from the refrigerator 82 are the same as the function and configuration of the refrigerator 72 and the heat radiator 76 shown in FIG. 3, the description thereof will be omitted. That is, the power supplied to the refrigerator 82 is supplied from the power storage device 14. In addition, the heat radiator 86 is installed in a shaded region of a lunar polar region.

In the liquid oxygen storage tank 80o, the oxygen gas that has been vaporized is returned to the oxygen gas tank 36o via a return oxygen gas line 88o. The liquid oxygen stored in the liquid oxygen storage tank 80o is suctioned by the transfer pump 90 and is supplied to the propellant tank RTo of the inter-orbit transfer vehicle R via a liquid oxygen transfer line 98o. The power supplied to the transfer pump 90 is supplied from the power storage device 14.

The liquid hydrogen transfer line 98h and the liquid oxygen transfer line 98o of the propellant plant system 1 can be connected and disconnected at a connecting portion C provided on an outer shell of the inter-orbit transfer vehicle R. The connecting portion C is implemented by, for example, a well-known quick disconnect.

As shown in FIG. 1, the high-pressure hydrogen gas line 38h, the liquid hydrogen line 78h, the return hydrogen gas line 88h, the liquid hydrogen transfer line 98h, the high-pressure oxygen gas line 38o, the liquid oxygen line 78o, the return oxygen gas line 88o, and the liquid oxygen transfer line 98o are provided with a shield valve V. The shield valve V is not limited to the position shown in the drawing, and may be provided as appropriate. In addition, a bypass flow path, a bypass valve, or the like may be provided in each line of the propellant plant system 1 as appropriate.

The control device 100 is a controller that controls each unit of the propellant plant system 1. Each unit of the propellant plant system 1 is controlled by the control device 100, so that liquefied hydrogen and liquefied oxygen, which are propellants, are produced by utilizing resources and the environment on the moon. The control device 100 may be, for example, a computer including an arithmetic circuit such as a central processing unit (CPU), a memory, a storage, an interface, and the like. The control device 100 may be configured by a plurality of computers divided into some functions, or may be separately present via a network.

In the following description, in a case where the hydrogen gas tank 36h and the oxygen gas tank 36o are not particularly distinguished from each other, the hydrogen gas tank 36h and the oxygen gas tank 36o are simply referred to as a gas tank 36. In addition, in a case where the high-pressure hydrogen gas line 38h and the high-pressure oxygen gas line 38o are not particularly distinguished from each other, the high-pressure hydrogen gas line 38h and the high-pressure oxygen gas line 38o are simply referred to as a high-pressure gas line 38. In addition, in a case where the hydrogen liquefaction device 40h and the oxygen liquefaction device 40o are not particularly distinguished from each other, the hydrogen liquefaction device 40h and the oxygen liquefaction device 40o are simply referred to as a liquefaction device 40. In addition, in a case where the first heat exchanger 50h and the first heat exchanger 50o are not particularly distinguished from each other, the first heat exchanger 50h and the first heat exchanger 50o are simply referred to as a first heat exchanger 50. In addition, in a case where the first cooling hydrogen gas line 58h and the first cooling oxygen gas line 58o are not particularly distinguished from each other, the first cooling hydrogen gas line 58h and the first cooling oxygen gas line 58o are simply referred to as a first cooling gas line 58. **In** addition, in a case where the second cooling hydrogen gas line 68h and the second cooling oxygen gas line 68o are not particularly distinguished from each other, the second cooling hydrogen gas line 68h and the second cooling oxygen gas line 68o are simply referred to as a second cooling gas line 68. **In** addition, in a case where the second heat exchanger 70h and the second heat exchanger 70o are not particularly distinguished from each other, the second heat exchanger 70h and the second heat exchanger 70o are simply referred to as a second heat exchanger 70. **In** addition, in a case where the liquid hydrogen line 78h and the liquid oxygen line 78o are not particularly distinguished from each other, the liquid hydrogen line 78h and the liquid oxygen line 78o are simply referred to as a liquid line 78. **In** addition, in a case where the liquid hydrogen storage tank 80h and the liquid oxygen storage tank 80o are not particularly distinguished from each other, the liquid hydrogen storage tank 80h and the liquid oxygen storage tank 80o are simply referred to as a storage tank 80. **In** addition, in a case where the return hydrogen gas line 88h and the return oxygen gas line 88o are not particularly distinguished from each other, the return hydrogen gas line 88h and the return oxygen gas line 88o are simply referred to as a return gas line 88. **In** addition, in a case where the liquid hydrogen transfer line 98h and the liquid oxygen transfer line 98o are not particularly distinguished from each other, the liquid hydrogen transfer line 98h and the liquid oxygen transfer line 98o are simply referred to as a transfer line 98. **In** addition, in a case where the propellant tank RTh and the propellant tank RTo are not particularly distinguished from each other, the propellant tank RTh and the propellant tank RTo are simply referred to as a propellant tank RT.

### (Disposition Example of Heat Radiator)

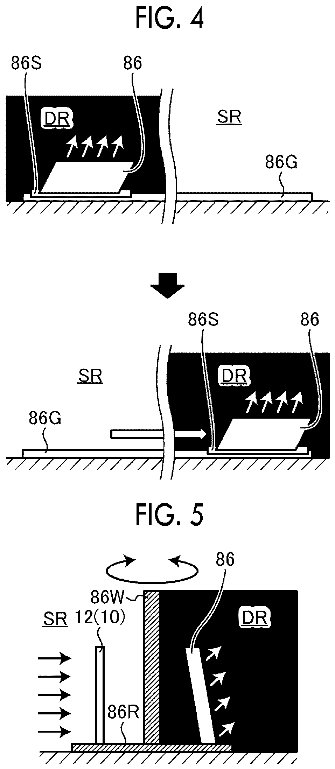

FIG. 4 is a schematic diagram showing a disposition example of the heat radiator shown in FIG. 1. Hereinafter, as an example, a disposition example of the heat radiator 86 that dissipates heat from the refrigerator 82 that cools the storage tank 80 will be described. However, the present disposition example may be applied not only to the heat radiator 86 but also to the heat radiator 56 or the heat radiator 76 shown in FIGS. 2 and 3.

As described above, the heat radiator 86 is installed in the shaded region DR of the lunar polar region, and the heat dissipation is made efficient by using the low temperature of the shaded region DR. In the lunar polar region, the sunlit region and the shaded region move in a long cycle. A place that is permanently shaded, such as the inside of a crater, may not be suitable for the installation of the heat radiator 86. Therefore, it is preferable that the heat radiator 86 is installed to be movable such that the heat can be dissipated in the shaded region DR at all times in response to the moving shaded region.

In the example shown in FIG. 4, the heat radiator 86 is fixed to a sliding base 86S that is movable on a guide rail 86G. The guide rail 86G is provided in a range in which at least one of the regions is always the shaded region DR. Accordingly, the installation location of the heat radiator 86 can be periodically changed in accordance with the movement of the sunlit region SR and the shaded region DR.

The movement of the sliding base 86S is controlled by, for example, the control device 100. The control device 100 stores, for example, the sunshine duration at each point in the lunar polar region in advance, and moves the heat radiator 86 and the sliding base 86S to the shaded region DR based on the sunshine duration. The control device 100 may control the movement point and the timing of the movement such that the movement frequency of the sliding base 86S is reduced.

FIG. 5 is a schematic diagram showing another disposition example of the heat radiator shown in FIG. 1. In the example shown in FIG. 5, the heat radiator 86 is fixed to a rotating base 86R. A standing wall 86W is erected in a vertical direction from the rotating base 86R. The standing wall 86W forms the shaded region DR on the other surface side by facing one surface toward the direction of the sun. Accordingly, the heat radiator 86 can always be present in the shaded region DR formed by the standing wall 86W as the rotating base 86R rotates around the vertical axis.

In the example shown in FIG. 5, the solar panel 12 may be combined. It is preferable that the solar panel 12 is always installed in the sunlit region SR in order to improve the efficiency of power generation. The solar panel 12 is fixed to the rotating base 86R on the opposite side of the heat radiator 86 with the standing wall 86W interposed therebetween. That is, the rotating base 86R is periodically rotated such that the heat radiator 86 is always located in the shaded region DR by the standing wall 86W, so that the solar panel 12 can face the direction in which the sunlight is emitted in the sunlit region SR. For example, in a case where the rotating base 86R is provided to be movable in combination with the guide rail 86G shown in FIG. 4, the solar panel 12 can be adjusted to always be present in the sunlit region SR, and the heat radiator 86 can be adjusted to always be present in the shaded region DR.

The rotation of the rotating base 86R is controlled by, for example, the control device 100. The control device 100 stores in advance, for example, the sunshine duration at each point in the lunar polar region, and rotates the rotating base 86R such that the heat radiator 86 is on the shaded region DR side and the solar panel 12 is on the sunlit region SR side, based on the sunshine duration. In other words, the control device 100 rotates the rotating base 86R such that one surface of the standing wall 86W on the solar panel 12 side faces the direction in which the sun irradiates the surface. The control device 100 may control the rotation angle and the timing of the rotation such that the rotation frequency of the rotating base 86R is reduced. As still another example, instead of the rotating base 86R shown in FIG. 5, the solar panel 12, the power storage device 14, and the heat radiator 86 may be mounted on a moving body having the standing wall 86W. The moving body is, for example, a vehicle that moves on the ground surface of the lunar polar region in a straight line and in a revolving manner.

### (Actions and Effects of Embodiment)

The propellant plant system 1 according to the embodiment is understood, for example, as follows.

A propellant plant system 1 according to a first aspect includes a water intake device 20 that recovers water resources and stores the water resources as liquid water, an electrolysis device 30 that electrolyzes the water to generate hydrogen gas and oxygen gas, a liquefaction device 40 that liquefies a target gas that is at least one of the hydrogen gas and the oxygen gas, a storage tank 80 that stores a target liquid that is the liquefied target gas, a first refrigerator (refrigerator 82) that cools the storage tank 80, a first heat radiator (heat radiator 86) that exchanges heat with the first refrigerator, and a power generation device 10 that is installable in a sunlit region of a lunar polar region and generates power by irradiation with sunlight to supply power to at least one of the electrolysis device 30, the liquefaction device 40, and the first refrigerator, in which, in a case where the first heat radiator is installed in a shaded region of the lunar polar region, the first heat radiator dissipates heat to the shaded region to cool the first refrigerator at an environmental temperature in the shaded region.

In the propellant plant system 1 according to the first aspect, in a case where the propellant plant system 1 is installed in the lunar polar region, water as a raw material in a case of producing liquid hydrogen and liquid oxygen, which are propellants, can be recovered from the water resources of the lunar polar region. Therefore, it is not necessary to transport water to the outer space, and the cost can be suppressed. In addition, since the environmental temperature in the shaded region of the lunar polar region is used for the heat dissipation of the first refrigerator for preventing the target liquid from being vaporized, the cooling efficiency is improved, and energy saving can be realized. In the propellant plant system 1, the power that is the electric power is acquired by power generation using the sunlight that irradiates the sunlit region of the lunar polar region. However, since the amount of power can be suppressed by improving the cooling efficiency by using the environmental temperature in the shaded region of the lunar polar region, the propellant plant system 1 can be sufficiently operated by the amount of power generated by the sunlight.

A propellant plant system 1 according to a second aspect is the propellant plant system 1 according to the first aspect, in which the electrolysis device 30 electrolyzes the water in a state where the water is pressurized to generate the hydrogen gas and the oxygen gas. Accordingly, since the electric power for pressurization can be reduced as compared with a case of pressurizing the hydrogen gas and the oxygen gas after the electrolysis, energy saving can be realized.

A propellant plant system 1 according to a third aspect is the propellant plant system 1 according to the first aspect, in which the liquefaction device 40 includes a first heat exchanger 50 including a second heat radiator (heat radiator 56) that exchanges heat with the target gas, an expansion turbine 60 that adiabatically expands and cools the target gas cooled by the first heat exchanger 50, a second heat exchanger 70 that cools and liquefies the target gas by exchanging heat between the target gas cooled by the expansion turbine 60 and a second refrigerator (refrigerator 72), and a third heat radiator (heat radiator 76) that exchanges heat with the second refrigerator, in a case where the second heat radiator is installed in the shaded region of the lunar polar region, the second heat radiator dissipates heat to the shaded region to cool the target gas at the environmental temperature in the shaded region, and in a case where the third heat radiator is installed in the shaded region of the lunar polar region, the third heat radiator dissipates heat to the shaded region to cool the second refrigerator at the environmental temperature in the shaded region.

In the propellant plant system 1 according to the third aspect, the target gas is cooled and liquefied in a stepwise manner. In this case, in the first stage, the environmental temperature in the shaded region of the lunar polar region is used for cooling the target gas. Therefore, the cooling efficiency is improved, and energy saving can be realized. In addition, since the environmental temperature in the shaded region of the lunar polar region is also used for the heat dissipation of the second refrigerator that further cools and liquefies the target gas at a low temperature, the cooling efficiency is improved, and energy saving can be realized.

A propellant plant system 1 according to a fourth aspect is the propellant plant system 1 according to any one of the first to third aspects, in which the first heat radiator (heat radiator 86) is movable. Accordingly, the first heat radiator can always dissipate heat to the shaded region, a decrease in cooling efficiency can be suppressed, and energy saving can be realized.

The propellant plant system 1 according to a fifth aspect is the propellant plant system 1 according to the fourth aspect, further including a control device 100 that stores a sunshine duration in the lunar polar region in advance and controls movement of the first heat radiator (heat radiator 86) based on the sunshine duration. Accordingly, since the first heat radiator can be moved to a suitable movement point at a suitable timing, a movement frequency of moving the first heat radiator to the shaded region can be reduced, and the electric power required for the movement can be reduced, so that energy saving can be realized.

### Reference Signs List

1: propellant plant system
10: power generation device
12: solar panel
14: power storage device
20: water intake device
22: ice collection device
24: separation and purification device
26: water storage tank
28: water supply line
30: electrolysis device
32: high-pressure water supply pump
34: electrolytic cell
36: gas tank
38: high-pressure gas line
40: liquefaction device
50: first heat exchanger
52: refrigerant line
56: heat radiator
58: first cooling gas line
60: expansion turbine
68: second cooling gas line
70: second heat exchanger
72: refrigerator
76: heat radiator
78: liquid line
80: storage tank
82: refrigerator
86: heat radiator
88: return gas line
90: transfer pump
98: transfer line
100: control device
C: connecting portion
R: inter-orbit transfer vehicle
RT: propellant tank
V: shield valve

## Claims

1. A propellant plant system comprising:
a water intake device that recovers water resources and stores the water resources as liquid water;
an electrolysis device that electrolyzes the water to generate hydrogen gas and oxygen gas;
a liquefaction device that liquefies a target gas that is at least one of the hydrogen gas and the oxygen gas;
a storage tank that stores a target liquid that is the liquefied target gas;
a first refrigerator that cools the storage tank;
a first heat radiator that exchanges heat with the first refrigerator; and
a power generation device that is installable in a sunlit region of a lunar polar region and generates power by irradiation with sunlight to supply power to at least one of the electrolysis device, the liquefaction device, and the first refrigerator,
wherein, in a case where the first heat radiator is installed in a shaded region of the lunar polar region, the first heat radiator dissipates heat to the shaded region to cool the first refrigerator at an environmental temperature in the shaded region.

2. The propellant plant system according to Claim 1,
wherein the electrolysis device electrolyzes the water in a state where the water is pressurized to generate the hydrogen gas and the oxygen gas.

3. The propellant plant system according to Claim 1,
wherein the liquefaction device includes
a first heat exchanger including a second heat radiator that exchanges heat with the target gas,
an expansion turbine that adiabatically expands and cools the target gas cooled by the first heat exchanger,
a second heat exchanger that cools and liquefies the target gas by exchanging heat between the target gas cooled by the expansion turbine and a second refrigerator, and
a third heat radiator that exchanges heat with the second refrigerator,
in a case where the second heat radiator is installed in the shaded region of the lunar polar region, the second heat radiator dissipates heat to the shaded region to cool the target gas at the environmental temperature in the shaded region, and
in a case where the third heat radiator is installed in the shaded region of the lunar polar region, the third heat radiator dissipates heat to the shaded region to cool the second refrigerator at the environmental temperature in the shaded region.

4. The propellant plant system according to any one of Claims 1 to 3,
wherein the first heat radiator is movable.

5. The propellant plant system according to Claim 4, further comprising:
a control device that stores a sunshine duration in the lunar polar region in advance and controls movement of the first heat radiator based on the sunshine duration.
